# EUROPÄISCHE PATENTSCHRIFT

(11) **EP 0 536 555 B1**
(45) Veröffentlichungstag und Bekanntmachung des Hinweises auf die Patenterteilung: **08.03.1995**
(21) Anmeldenummer: 92115557.8
(22) Anmeldetag: 11.09.1992
(51) Int. Cl.: A47J 27/08

(54) **Dampfdruckkochtopf**
Pressure cooking vessel
Récipient de cuisson sous pression

(30) Priorität: 10.10.1991 DE 4133524
(43) Veröffentlichungstag der Anmeldung: 14.04.1993
(73) Patentinhaber: FISSLER GMBH, D-55715 Idar-Oberstein (DE)
(72) Erfinder: Thelen, Arnold, D-60322 Frankfurt am Main (DE); Falkenstein, Heinz Peter, Dr., D-60322 Frankfurt am Main (DE)
(74) Vertreter: Keil, Rainer A., Dipl.-Phys. Dr.

(56) Entgegenhaltungen:
- EP-A- 0 139 772
- FR-A- 2 414 318
- NL-A- 6 409 983

## Beschreibung

Die Erfindung bezieht sich auf einen Dampfdruckkochtopf nach dem Oberbegriff des Anspruchs 1.

Ein solcher Dampfdruckkochtopf ist bspw. aus der EP-A-0 139 772 bekannt und besteht aus einem Untertopf und einer den Untertopf verschließenden Deckeleinheit aus einem Unterdeckel und einem Oberdeckel. Der Untertopf hat einen umlaufenden nach außen abgewinkelten Topfrand. Der Oberdeckel ist als Schließeinrichtung ausgebildet und kann in seiner Verriegelungsstellung mit Umbördelungen den Topfrand von außen untergreifen. Hierzu weist der Oberdeckel zwei Halbdeckel auf, welche je um eine zu der vertikalen geometrischen Topfmittelachse im wesentliche parallele Drehachse relativ zu dem Unterdeckel und zu dem Untertopf drehbar sind. Die zu der Topfmittelachse exzentrischen Drehachsen sind bezüglich der Topfmittelachse diametral in einem mittig am Unterdeckel drehbar gelagerten Drehteil einander gegenüberliegend angeordnet. Der bekannte Dampfdruckkochtopf ist technisch aufwendig. Die Verschlußglieder des Schließmechanismus und die Betätigungseinrichtung sind insbesondere in der Öffnungsstellung der Halbdeckel von außen sichtbar, was zu einem nicht erwünschten, technischen Aussehen des Dampfdruckkochtopfes führt. Zum anderen bilden die durch die Halbdeckel gebildeten Verschlußglieder, die von außen den abgewinkelten Topfrand untergreifen, einen langen wirksamen Hebel, so daß eine Gefahr der Deformation der Halbdeckel bzw. dessen Umbördelungen bzw. des Topfrandes des unter Druck stehenden Dampfdruckkochtopfes besteht.

Aus der FR-A-2 414 318 ist ein Dampfdruckkochtopf mit einem Untertopf und einem Topfdeckel bekannt, welcher zum druckdichten Verschließen auf den Untertopf aufschiebbar ist. Hierzu weist der Untertopf einen ebenen, oben umlaufenden, auswärts abgewinkelten, wenigstens zwei im wesentlichen parallele oder zum Stirnende des Untertopfes konisch auseinanderlaufende Außenlängskanten am Topfrand auf, welche von einem unteren einwärts gebogenen, bis auf eine stirnseitige Endaussparung am Deckelumfang in Anpassung an den Verlauf der Außenkanten des Topfrandes umlaufenen Randflansch in Verschlußstellung des Topfdeckels untergriffen sind. Durch diese Maßnahme ist der Deckel an dem Untertopf praktisch über den gesamten Umfang gehalten, die Öffnungskräfte bei Überdruck wirken jedoch ebenfalls auf leicht verformbare Randflansche. Die Dichtung ist zudem aufgrund des seitlichen Aufschiebens des Deckels auf den Behälter einem hohen Verschleiß unterworfen.

Bei dem Dampdruckkochtopf nach der EP-A-0 108 203 weist der Deckel eine zentrische Haube und einen Rahmen auf. Der Rahmen sitzt über ein Dichtungsprofil auf einem nach außen abgewinkelten Behälterrand auf und die Verschlußglieder untergreifen in ihrer radial innen liegenden Verriegelungsstellung mit einem nach unten innen abgewinkelten Randflansch den Behälterrand. Das Dichtungsprofil ist im Querschnitt etwa U-förmig und liegt mit einer an seinem unteren Ende ausgebildeten Dichtlippe an dem Behälterrand an. Das Bestreben ist es, Dampfdruckkochtöpfen trotz ihrer aufwendigen technischen Einrichtungen, welche für die Einhaltung der Sicherheitserfordernisse erforderlich sind, ein möglichst untechnisches Aussehen zu geben, eine einfache Handhabung beim Aufsetzen sowie Verriegeln und Entriegeln des Deckels auf dem Behälter zu gewährleisten und bei Verwendung möglichst einfacher Teile hohen Sicherheitsanforderungen zu genügen. Diesen verschiedenen Aspekten kann der bekannte Dampfdruckkochtopf nicht in befriedigender Weise gerecht werden. Insbesondere ist dort eine verhältnismäßig komplizierte Dichtung erforderlich, das Aufsetzen des Deckels auf den Behälter bedarf einer beachtlichen Geschicklichkeit, weil, von oben gesehen, der von den Verschlußgliedern bestimmte. Außendurchmesser des Deckels nicht der für die Aufnahme des Behälterrandes bestimmten Deckelöffnung entspricht. Das Aussehen des Deckels wird zwangsläufig von den Verschlußgliedern bestimmt, weil diese die Haube, den Rahmen und den Behälterrand außen umgreifen müssen.

Aus der EP-A 0 122 295 ist ein Druckgefäß für Nahrungsmittel zur Verwendung in einem Mikrowellenherd bekannt, bei welchem der Deckel druckdicht auf einen Behälter aufsetzbar ist. Dabei liegt der Deckelkörper auf einer Innenschulter der Behälterwandung auf. Der Spalt zwischen Deckelaußenumfang und Innenfläche der Behälterwandung ist von einem Dichtungsring abgedeckt, welcher in einer Innenumfgangsnut der Behälterwandung im Abstand oberhalb der Innenschulter angeordnet ist und aus dieser mittels einer Zuglasche entfernt werden kann. Zum Verschließen des Gefäßes ist zunächst der Deckelkörper auf die Innenschulter der Behälterwandung aufzusetzen. Dann wird der Dichtungsring gesondert von Hand in die Innenumfangsnut eingelegt. Bei Benutzung des Gefäßes zum Kochen muß der gesamte Innendruck von dem Dichtungsring aufgenommen werden, dessen lichter Innendurchmesser etwas geringer ist als der Außendurchmesser des Deckelkörpers. Auf diese Weise kann, wenn mit höheren Drücken, wie in einem Dampfdruckkochtopf, gearbeitet werden soll, den Sicherheitsanforderungen nicht entsprochen werden, insbesondere dann, wenn nicht zusätzliche Druckentlastungsmaßnahmen getroffen sind, welche jedoch auch versagen können. Beim Schließen und Öffnen des bekannten Gefäßes müssen Deckelkörper und Dichtungsring ferner umständlich gesondert gehandhabt werden.

Ein ähnliches Kochgefäß ist aus der CH-A-273 354 bekannt. Auch hier muß zum nachträglichen Verschließen des Deckels gegenüber dem Behälter ein mit einer Lasche zum Herausnehmen versehener Dichtungsring in eine von oben zugängliche Umfangsnut des Behälterrandes eingesetzt werden.

Aus der FR-A 2 531 847 ist ein Dampfdruckkochtopf bekannt, bei welchem der Deckel mit einem Bügel aussgestattet ist, welcher in seinem axialen Abstand von dem Deckelkörper verstellbar ist. In Verriegelungsstellung untergreift der Bügel mit seinen äußeren Enden zwei einander diametal gegenüberliegend am Behälterrand angebrachte Fanghaken. Der Deckelkörper selbst liegt in Verriegelungsstellung mit einem in einer Umfangsnut angeordneten O-Ring am oberen Ende des Behälterrandes an. Das Verschließen und Öffnen eines solchen Dampfdruckkochtopfes ist verhältnismäßig umständlich, da der Bügel mittels einer Spindel gegenüber dem Deckelkörper verstellt werden muß. Außerdem bietet ein derartiger Dampfdruckkochtopf nicht das erforderliche Maß an Sicherheit, weil der Bügel jeweils nur mit seinen beiden Enden abgefangen wird und bei erheblicher Druckbeanspruchung sich die Fanghaken und/oder der Bügel verformen können. Zusätzlich besteht das Problem, daß der in de Gefäßinneren herrschende Druck von der Spindel aufgefangen werden muß.

Aus der NL-A-6 409 983 ist ein Dampfdruckkochtopf bekannt, dessen Deckel aus einem Ober- und einem Unterdeckel besteht. Mittels eines auf dem Oberdeckel angeordneten Kniehebels kann der Unterdeckel gegen die Kraft einer zwischen Ober- und Unterdeckel angeordnete Feder in Richtung auf eine am Rand des Oberdeckels befestigte und an einer umlaufenden Rippe des Behälters anliegende Dichtung bewegt werden. Das Aufsetzen der Deckeleinheit ist kompliziert. Die Dichtung ist beim Schließen starken Belastungen ausgesetzt.

Aufgabe der Erfindung ist es, einen Dampfdruckkochtopf der in EP-A-0 139 722 beschriebenen Art zu schaffen, bei welchem die zuvor geschilderten Nachteile vermieden und insbesondere einfache Bedienbarkeit, Verwendung einfacher Teile, wenig technisches Aussehen und hoche Sicherheit miteinander verbunden sind.

Diese Aufgabe wird bei einem Dampfdruckkochtopf mit den Merkmalen des Anspruchs 1 gelöst.

Durch diese Maßnahmen wird ein einfach aufgebauter Dampfdruckkochtopf unter Verwendung einfacher Teile geschaffen, der einfach bedienbar ist und eine hohe Sicherheit bei wenig technischem Aussehen aufweist.

Dabei kann der Dichtungsring über seinen gesamten Querschnitt oder wenigstens einen wesentlichen Teil seines Querschnitts als O-Ring ausgebildet und jedenfalls mit einem Teilbereich seines O-Ring-Querchnitts in einer z.B. nach radial außen offenen Umfangsnut des Deckels aufgenommen sein. Ein derartiger Dichtungsring ist als handelsübliches Teil einfach ausgebildet.

Es ist aber auch möglich, daß der Dichtungsring ausgehend von seiner O-Ring-förmigen Grundgestalt eine sich unter Behälterinnendruck behälterbodenseitig der Dichtschulter an die Innenfläche der Behälterwand ringsum dichtend anlegende Dichtlippe aufweist, um die Druckdichtigkeit des Dampfdruckkochtopfes noch zu erhöhen.

Bei einer besonderen Ausgestaltung der Erfindung ist die Dichtschulter als behälterbodenseitig liegender Teilbereich einer zur Behälteröffnung hin offenen, an der Behälterwandung ausgebildeten Aufnahmenut ausgebildet. Hierdurch wird die Verformbarkeit der Dichtschulter verringert.

Dem gleichen Zweck dient eine weitere Ausgestaltung der Erfindung, wonach die Verriegelungsschulter in einem behälteröffnungsseitig liegenden Teilbereich der Behälterwandung ausgebildet ist.

Das Aufsetzen des Deckels auf den Behälter kann dadurch erleichtert werden, daß der Behälter in einem Bereich der Verriegelungsschulter einen größeren lichten Durchmesser hat als im Bereich der Dichtschulter.

In diesem Zusammenhang ist es von Vorteil, wenn die Innenfläche der Behälterwandung in dem Bereich von der Eingriffsnut zur Dichtschulter stetig konisch von radial außen nach radial innen verläuft, so daß der Deckel beim Aufsetzen problemlos zentriert wird.

Eine besonders einfache Herstellbarkeit eines die Erfindung aufweisenden Dampfdruckkochtopfes wird dann gewährleistet, wenn die Verriegelungsschulter und/oder die Dichtschulter, sowie vorzugsweise die Eingriffsnut und/oder die Aufnahmenut in die Behälterwandung bei im wesentlichen gleichbleibender Wandstärke eingeformt sind.

Eine gleichmäßige Verriegelung des Deckels gegenüber dem Behälter über den gesamten Umfang kann dadurch gewährleistet werden, daß über den Umfang des Deckels verteilt wenigstens zwei, einen wesentlichen Teil des Umfanges ausmachende Verschlußglieder in gleichem Winkelabstand voneinander an dem Deckelkörper verschiebbar gelagert und von einer gemeinsamen, z.B. zentrisch am Deckelkörper angeordneten Betätigungseinrichtung aus in ihre Öffnungsstellung und Verriegelungsstellung überführbar sind.

Der Schließmechanismus zwischen der Betätigungseinrichtung und den Verschlußgliedern kann vorzugsweise eine Kulissenführung aufweisen, welche die Drehbewegung eines z.B. an dem Deckelkörper gelagerten Deckelknopfes in eine radiale Bewegung der Verschlußglieder umsetzt. Auf diese Weise ist eine einfache und leichtgängige Bedienbarkeit gewährleistet.

Um dem Dampfdruckkochtopf ein möglichst untechnisches Aussehen zu geben, können die Verschlußglieder, der Schließmechanismus und die Betätigungseinrichtung, bis auf den Deckelknopf, von einer Deckelhaube abgedeckt sein. Da die Verschlußglieder ohnehin nur in ihrer Verriegelungsstellung radial nach außen verschoben sind, bleiben sie damit für den Benutzer praktisch unsichtbar.

Bei einem Topf nach den abhängigen Anspruch 12 mit einem Sicherheits- und/oder Druckentlastungsventil in seinem Deckel, bei welchem der Deckel einen Deckelkörper und eine den Deckelkörper abdeckende Deckelhaube aufweist und das Sicherheits- und/oder Druckentlastungsventil unter der Deckelhaube angeordnet ist, bildet erfindungsgemäß der auf dem Behälter aufgesetzte und mit dem Behälter verrieelbare Deckel mit dem Behälter zwischen der Oberkante des Behälterrandes und der Unterkante der Deckelhaube einen Spalt zum Austritt des aus dem Ventil entweichenden Dampfes.

Im Unterschied hierzu ist bei dem Dampfdruckkochtopf nach der EP-A-0 139 772 eine Entlüftungs- und Druckentlastungseinrichtung im Unterdeckel vorgesehen, der eine Sicherungsöffnung in der Deckelhaube zugeordnet ist, durch die der aus der Entlüftungs- und Druckentlastungseinrichtung austretende Dampf an der Oberseite des Deckels entweichen kann. Ein Austreten des Dampfes an der Oberseite des Deckels erhöht die Verbrennungsgefahr des unachtsamen Benutzers. Erfindungsgemäß wird zwischen der Oberkante des Behälterrandes und der Unterkante der Deckelhaube ein Spalt zum Austritt des aus dem Ventil entweichenden Dampfes gebildet. Der dem Topfinneren durch die Ventile entweichende Dampf kann in diesem Falle am äußeren Rand der Haube über deren Umfang verteilt austreten, so daß eine Verbrennungsgefahr für den Benutzer erheblich verringert ist.

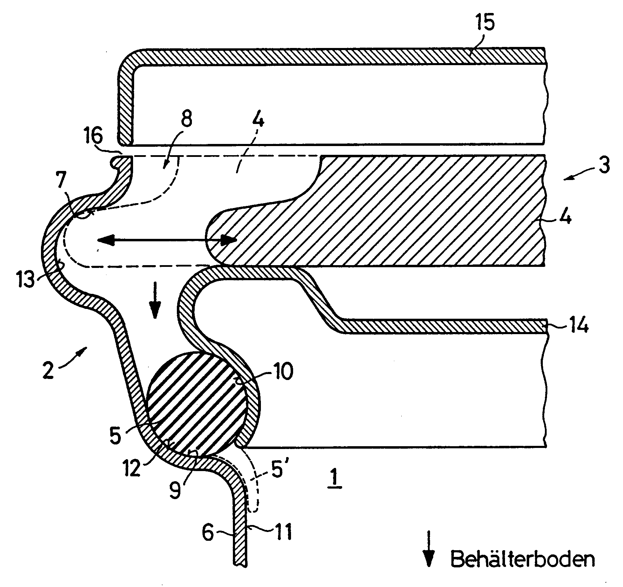

Nachfolgend werden Ausführungsbeispiele der Erfindung anhand der Zeichnung näher erläutert.

Die einzige Figur veranschaulicht im Schnitt einen die Erfindung aufweisenden Dampfdruckkochtopf gemäß einer besonderen Ausgestaltung im Bereich des Behälter- und Deckelrandes.

Entsprechend der zeichnerischen Darstellung hat ein erfindungsgemäßer Behälter 1 mit im wesentlichen kreiszylindrischer Behälterwandung 6 einen besonders gestalteten Behälterrand 2, auf welchen ein Deckel 3 zum druckdichten Verschließen des Behälters 1 aufsetzbar und mit diesem verriegelbar ist. Der Deckel 3 hat dabei Verschlußglieder 4, welche von einer (nicht dargestellten) Betätigungseinrichtung aus mittels eines (ebenfalls nicht dargestellten) Schließmechanismus zwischen einer radial zurückgezogenen (in durchgezogenen Linien dargestellten) Öffnungsstellung in eine radial nach außen geschobene (in gestrichelten Linien dargestellten) Verriegelungsstellung überführbar sind. In der Öffnungssstellung der Verschlußglieder 4 kann der Deckel 3 in die Behälteröffnung 8 von oben eingesetzt und auch wieder aus dieser herausgenommen werden, während in der Verriegelungsstellung der Verschlußglieder 4 der Deckel 3 an seinem Umfang unter Zwischenlage eines umlaufenden Dichtungsringes 5 gegen einen Bereich des Behälterrandes 2 gepreßt ist. Entsprechend der Darstellung hat die Behälterwandung 6 auf ihrer Innenseite im Bereich des Behälterrandes 2 eine zum Behälterboden (also in der Zeichnung nach unten) hin weisende Verriegelungsschulter 7 und eine zur Behälteröffnung 8 (also in der Zeichnung nach oben) hin weisende Dichtschulter 9. Wesentlich ist, daß die Verriegelungsschulter 7 und die Dichtschulter 9 einander zugewandt sind, so daß der Deckel 3 mit Hilfe der radial nach außen geschobenen Verschlußglieder 4 unter Abstützung des Dichtungsringes 5 auf der Dichtschulter 9 an der Behälterwandung 6 verspannt werden kann. Die Verschlußglieder 4 stützen sich entsprechend der Darstellung also in ihrer äußeren Verriegelungsstellung an der Verriegelungsschulter 7 unter Pressen des Dichtungsringes 5 gegen die Dichtschulter 9 ab. Dementsprechend ist der Abstand von Verriegelungsschulter 7 und Dichtschulter 9 etwas geringer bemessen als die mit der Verriegelungsschulter 7 und der Dichtschulter 9 in Eingriff tretenden nach oben und nach unten gewandten Flächenbereiche der Verschlußglieder 4 und des Dichtungsringes 5. Bei der Verriegelung wird dadurch der Dichtungsring 5 in hinreichendem Maße zusammengedrückt, so daß der Behälter 1 über seinen gesamten Umfang entsprechend dem insgesamt umverlaufenden Dichtungsring 5 auch unter Berücksichtigung des sich im Behälterinnenraum beim Kochen aufbauenden Innendrucks durch die Abstützung des Deckels 3 mit Hilfe der Verschlußglieder 4 an der umlaufenden Verriegelungsschulter 7 stets zuverlässig abgedichtet ist. Der Dichtungsring 5 ist, wie aus der zeichnerischen Darstellung mit ausgezogener Linie ersichtlich, über seinen gesamten Querschnitt als O-Ring ausgebildet. Mit einem Teilbereich seines O-Ring-Querschnittes ist der Dichtungsring 5 in einer nach radial außen offenen Umfangsnut 10 des Deckels 3 aufgenommen. Aufgrund der Elastizität seines Materials und der dadurch bedingten Eigenspannung hält der Dichtungsring 5 sich, einmal in die Nut 10 eingelegt, selbst. Der Dichtungsring 5 ist aus der Nut 10, beispielsweise zu Reinigungs- oder Austauschzwecken, auch einfach wieder herausnehmbar.

Bei dem O-Ring kann es sich um ein handelsübliches Teil handeln. Wie mit gestrichelten Linien angedeutet, kann der Dichtungsring 5, ausgehend von seiner O-Ring-förmigen Grundgestalt, aber auch eine sich unter Behälterinnendruck behälterbodenseitig der Dichtschulter 9 an die Innenfläche 11 der Behälterwandung 6 ringsum dichtend anlegenden Dichtlippe 5' aufweisen. Dies erhöht einerseits die gewünschte Dichtigkeit bei erhöhtem Behälterinnendruck, andererseits erfordert dies aber eine besondere Querschnittsgestalt des Dichtungsringes 5.

Die Dichtschulter 9 ist als relativ zur Verriegelungsschulter 7 behälterbodenseitig liegender, in Anpassung an die ihm zugeordnete Oberflächengestalt des Dichtungsringes 5 konkaver Teilbereich einer zur Behälteröffnung 8 hin offenen, an der Behälterwandung 6 ausgebildeten Aufnahmenut 12 ausgebildet. Offen ist die Aufnahmenut 12 zur Behälteröffnung 8 hin deswegen, damit der Deckel 3 mit dem Dichtungsring 5 ohne weiteres so weit in die Behälteröffnung 8 eingesetzt werden kann, bis der Dichtungsring 5 an der Dichtschulter 9 zur Anlage kommt. So lange sind die Verschlußglieder 4 noch radial zurückgezogen. Beim anschließenden radialen Verschieben der Verschlußglieder 4 über den Außenumfang des Dichtungsringes 5 hinaus kommen die Verschlußglieder 4 in Eingriff mit der radial weiter außen als die Dichtschulter 9 liegenden Verriegelungsschulter 7. Die Verriegelungsschulter 7 ist als behälteröffnungsseitig liegender an die Oberflächengestalt der Verriegelungsglieder 4 angepaßter leicht konkaver Teilbereich einer zur Behälterachse (also in der Zeichnung nach rechts) zu hin offenen, an der Behälterwandung 6 ausgebildeten Eingriffsnut 13 ausgebildet. Der Behälter 1 hat also im Bereich der Verriegelungsschulter 7 einen größeren lichten Durchmesser als im Bereich der Dichtschulter 9, wodurch das einfache Einsetzen des Deckels 3 in die Behälteröffnung 8 gewährleistet ist. Eine Zentrierung des Deckels 3 beim Einsetzen in die Behälteröffnung 8 wird dabei dadurch erreicht, daß die Innenfläche 11 der Behälterwandung 6 in dem Bereich von der Eingriffsnut 13 zur Dichtschulter 9 (also in der Zeichnung von oben nach unten) stetig konisch von radial außen nach radial innen verläuft.

Die Eingriffsnut 13 und die Aufnahmenut 12 und damit auch die Verriegelungsschulter 7 und die Dichtschulter 9 sind in die Behälterwandung 6 bei im wesentlichen gleichbleibender Wandstärke eingeformt. Auf diese Weise kann der Behälterrand 2, welcher durch die Nutbildung in sich versteift ist, auch einem erhöhten Behälterinnendruck standhalten und daher eine größtmögliche Sicherheit gewährleisten.

In der Zeichnung ist nur ein Verschlußglied 4 zu sehen. In der Praxis werden wenigstens 2, vorzugsweise aber beispielsweise 3 bis 4 derartige Verschlußglieder 4 in gleichem Winkelabstand voneinander an dem Deckelkörper 14 verschiebbar gelagert und von einer gemeinsamen, z.B. zentrisch am Deckelkörper 14 angeordneten Betätigungseinrichtung aus in ihre Öffnungsstellung und Verriegelungsstellung überführbar sein. Dabei ist die Außenkontur der Verschlußglieder 4 so gestaltet, daß sie bis auf geringe Zwischenräume praktisch den gesamten Außenumfang des Deckels 3 erfassen und somit praktisch über den gesamten Umfang eine Verriegelung des Deckels 3 gegenüber dem Behälter 1 stattfinden kann.

Der Schließmechanismus zwischen der Betätigungseinrichtung und den Verschlußgliedern 4 kann eine Kulissenführung aufweisen, welche die Drehbewegung eines z.B. an dem Deckelkörper 14 gelagerten Deckelknopfes in eine radiale Bewegung der Verschlußglieder 4 umsetzt. Hierbei kann ein Schließmechnismus ähnlich dem Anwendung finden, welcher aus der EP-A-0 108 203 bekannt ist, nur mit dem Unterschied, daß die Verriegelungsstellung der Verschlußglieder 4 radial außen und die Öffnungsstellung der Verschlußglieder 4 radial innen liegt.

Die Verschlußglieder 4, der Schließmechanismus und die Betätigungseinrichtung können bis auf den Deckelknopf von einer Deckelhaube 15 abgedeckt sein, so daß die gesamte Deckelverriegelung für den Benutzer unsichtbar bleibt, da sie zwischen Deckelkörper 14 und Haube 15 untergebracht ist. Selbst die äußeren Enden der Verschlußglieder 4 sind für den Benutzer nicht ohne weiteres sichtbar, da sie lediglich bei auf den Behälter 1 aufgesetztem Deckel 3 radial nach außen verschoben werden, also in einem Fall, in dem sie in die Eingriffsnut 13 eingreifen. Wenn der Deckel 3 mit einem (nicht dargestellten) Sicherheitsventil und/oder (nicht dargestellten) Druckentlastungsventil, wofür bekannte Bauarten verwendbar sind, ausgestattet sein sollte, ist es von Vorteil auch diese unterhalb der Deckelhaube 15 in dem Deckelkörper 14 anzuordnen. Dies hat außerdem den Vorteil, daß die "technischen" Elemente für den Benutzer unsichtbar bleiben, und dient dem Zweck, daß der aus den Ventilen austretende Dampfstrahl umgelenkt wird und Dampf lediglich am Umfang aus dem Spalt 16 zwischen der Oberkante des Behälterrandes 2 und der Unterkante des Randes der Deckelhaube 15 austreten kann.

Ersichtlich werden für die Deckelverriegelung übliche leicht deformierbare und das Aufsetzen des Deckels erschwerende Bajonettsegmente ebensowenig benötigt wie ein nach außen abgewinkelter Umfangsrand des Behälters, welcher mit einwärts gebogenen, ebenfalls leicht deformierbaren Flanschabschnitten von Verschlußelementen zusammenwirken. Ferner ist in der Standardausführung der Erfindung ein handelsüblicher O-Ring als Dichtungsring 5 verwendbar. Das Aufsetzen, Verriegeln, Entriegeln und Abnehmen des Deckels ist denkbar einfach und ohne größeren Kraftaufwand möglich.

Ergänzend kann bei dem erfindungsgemäßen Dampfdruckkochtopf dafür Sorge getragen sein, daß die Verschlußglieder 4 in ihre Öffnungsstellung nur dann zurückgefahren werden können, wenn im Behälterinneren kein erhöhter Druck mehr herrscht, so daß auch insofern den Sicherheitsanforderungen an derartige Dampfdruckkochtöpfe Rechnung getragen ist. Erreicht werden kann dies bspw. durch eine Sperrung der Verschlußglieder 4 in Verriegelungsstellung durch den Ventilstift des Sicherheitsventils.

## Patentansprüche

1. Dampfdruckkochtopf, mit einem für die Aufnahme des Kochgutes bestimmten Behälter (1), welcher mit Hilfe eines auf den Behälterrand (2) aufsetzbaren und mit diesem verriegelbarern Deckel (3) druckdicht verschließbar ist, bei welchem mittels eines an dem Deckel (3) vorgesehenen Schließmechanismus Verschlußglieder (4) von einer Betätigungseinrichtung aus zwischen einer Öffnungsstellung, in welcher der Deckel (3) von dem Behälter (1) abnehmbar ist, in eine Verriegelungsstellung überführbar sind, in welcher der Deckel (3) an seinem Umfang unter Zwischenlage eines umlaufenden Dichtungsringes (5) gegen einen Bereich des Behälterrandes (2) gepreßt ist, wobei die Behälterwandung (6) auf ihrer Innenseite im Bereich des Behälterrandes (2) eine zur Behälteröffnung (8) hin weisende Dichtschulter (9) aufweist und sich die Verriegelungsglieder (4) in ihrer Verriegelungsstellung unter Pressen des Dichtringes (5) gegen die Dichtschulter (9) an dem Behälter (1) abstützen, dadurch gekennzeichnet, daß die Behälterwandung (6) auf ihrer Innenseite im Bereich des Behälterrandes (2) eine der Abstützung der Verschlußglieder (4) in ihrer Verriegelungsstellung dienende, zum Behälterboden hin weisende Verriegelungsschulter (7) aufweist, welche als Teilbereich einer zur Behälterachse hin offenen, an der Behälterwandung (6) ausgebildeten Eingriffsnut (13) ausgebildet ist.

2. Topf nach Anspruch 1, dadurch gekennzeichnet, daß der Dichtungsring (5) über seinen gesamten Querschnitt oder über einen wesentlichen Teil seines Querschnitts als O-Ring ausgebildet und jedenfalls mit einem Teilbereich seines O-Ring-Querschnitts in einer z.B. nach radial außen offenen Umfangsnut (10) des Deckels (3) aufgenommen ist.

3. Topf nach Anspruch 1 oder 2, dadurch gekennzeichnet, daß der Dichtungsring (5) ausgehend von seiner O-Ring-förmigen Grundgestalt eine sich unter Behälterinnendruck behälterbodenseitig der Dichtschulter (9) an die Innenfläche (11) der Behälterwand (6) ringsum dichtend anlegende Dichtlippe (5') aufweist.

4. Topf nach einem der Ansprüche 1 bis 3, dadurch gekennzeichnet, daß die Dichtschulter (9) als behälterbodenseitig liegender Teilbereich einer zur Behälteröffnung (8) hin offenen, an der Behälterwandung (6) ausgebildeten Aufnahmenut (12) ausgebilet ist.

5. Topf nach einem der Ansprüche 1 bis 4, dadurch gekennzeichnet, daß die Verriegelungsschulter (7) in einem behälteröffnungsseitig liegenden Teilbereich der Behälterwandung (6) ausgebildet ist.

6. Topf nach einem der Ansprüche 1 bis 5, dadurch gekennzeichnet, daß der Behälter (1) im Bereich der Verriegelungsschulter (7) einen größeren lichten Durchmesser hat als im Bereich der Dichtschulter (9).

7. Topf nach einem der Ansprüche 1 bis 6, dadurch gekennzeichnet, daß die Innenfläche (11) der Behälterwandung (6) in dem Bereich von der Eingriffsnut (13) zur Dichtschulter (9) stetig konisch von radial außen nach radial innen verläuft.

8. Topf nach einem der Ansprüche 1 bis 7, dadurch gekennzeichnet, daß die Verriegelungsschulter (7) und/oder die Dichtschulter (9), sowie vorzugsweise die Eingriffsnut (13) und/oder die Aufnahmenut (12) in die Behälterwandung (6) bei in wesentlichem gleichbleibender Wandstärke eingeformt sind.

9. Topf nach einem der Ansprüche 1 bis 8, dadurch gekennzeichnet, daß über den Umfang des Deckels (3) verteilt wenigstens zwei Verschlußglieder (4) in gleichem Winkelabstand voneinander an dem Deckelkörper (14) verschiebbar gelagert und von einer gemeinsamen, z.B. zentrisch am Deckelkörper (14) angeordneten Betätigungseinrichtung aus in ihre Öffnungsstellung und Verriegelungsstellung überführbar sind.

10. Topf nach einem der Ansprüche 1 bis 9, dadurch gekennzeichnet, daß der Schließmechanismus zwischen der Betätigungseinrichtung und den Verschlußgliedern (4) eine Kulissenführung aufweist, welche die Drehbewegung eines z.B. an dem Deckelkörper (14) gelagerten Deckelknopfes in eine radiale Bewegung der Verschlußglieder (4) umsetzt.

11. Topf nach einem der Ansprüche 1 bis 10, dadurch gekennzeichnet, daß die Verschlußglieder (4), der Schließmechanismus und die Betätigungseinrichtung bis auf den Deckelknopf von einer Deckelhaube (15) abgedeckt sind.

12. Topf nach einen des vorhergehenden Ansprüchen mit einem Sicherheits- und/oder Druckentlastungsventil in seinem Deckel (3), bei welchem der Deckel (3) einen Deckelkörper (14) und eine den Deckelkörper (14) abdeckenden Deckelhaube (15) aufweist und das Sicherheits- und/oder Druckentlastungsventil unter der Deckelhaube (15) angeordnet ist, dadurch gekennzeichnet, daß der auf den Behälter (1) aufgesetzte und mit dem Behälter (1) verriegelbare Deckel (3) mit dem Behälter (1) zwischen der Oberkante des Behälterrandes (2) und der Unterkante der Deckelhaube (15) einen Spalt (16) zum Austritt des aus dem Ventil entweichenden Dampfes bildet.

## Claims

1. Steam pressure cooker having a container (1) adapted for accommodating the cooking material, the container being capable of being closed in a pressurized manner with the aid of a lid (3) which is capable of being attached to the container periphery (2) and is capable of being locked thereto, wherein by means of a closing mechanism provided at the lid (3), closure elements (4) are capable of being transferred by an actuation device between an opening position, in which the lid (3) is capable of being removed from the container (1), into a locking position, in which the lid (3) is pressed at its circumference with the interposition of a circumferential sealing ring (5) against a region of the container periphery (2), with the container wall (6) on its inner side in the region of the container periphery (2) having a sealing shoulder (9) pointing towards the container opening (8) and the locking elements (4) in their locking position being supported at the container (1) with pressing of the sealing ring (5) against the sealing shoulder (9), characterized in that the container wall (6) on its inner side in the region of the container periphery (2) has a locking shoulder (7) serving to support the closure elements (4) in their locking position and pointing towards the container floor, the locking shoulder (7) being constructed as a partial region of an engagement groove (13) open towards the container axis and constructed in the container wall (6).

2. Cooker according to claim 1, characterized in that the sealing ring (5) is constructed as an O-ring over its entire cross section or over a substantial part of its cross section and in any case is accommodated with a partial region of its O-ring cross section in a circumferential groove (10) of the lid (3) which is, for example, open radially in an outward direction.

3. Cooker according to claim 1 or 2, characterized in that the sealing ring (5) proceeding from its O-ring-shaped basic form has a sealing lip (5') joining in a sealing manner around the inner face (11) of the container wall (6) due to internal container pressure on the side of the container floor of the sealing shoulder (9).

4. Cooker according to one of claims 1 to 3, characterized in that the sealing shoulder (9) is constructed as a partial region, lying on the side of the container floor, of an accommodation groove (12) open towards the container opening (8) and constructed in the container wall (6).

5. Cooker according to one of claims 1 to 4, characterized in that the locking shoulder (7) is constructed in a partial region of the container wall (6) lying on the side of the container opening.

6. Cooker according to one of claims 1 to 5, characterized in that the container (1) has a larger internal diameter in the region of the locking shoulder (7) than in the region of the sealing shoulder (9).

7. Cooker according to one of claims 1 to 6, characterized in that the inner face (11) of the container wall (6) extends in the region from the engagement groove (13) to the sealing shoulder (9) in a continuously conical manner from a radially outward into a radially inward direction.

8. Cooker according to one of claims 1 to 7, characterized in that the locking shoulder (7) and/or the sealing shoulder (9), as well as preferably the engagement groove (13) and/or the accommodation groove (12), are moulded into the container wall (6) with substantially constant wall thickness.

9. Cooker according to one of claims 1 to 8, characterized in that distributed over the circumference of the lid (3) at least two closure elements (4) are displaceably mounted at the same angular distance from one another at the lid body (14) and can be transferred by a common actuation device, for example arranged centrally at the lid body (14), into their opening position and locking position.

10. Cooker according to one of claims 1 to 9, characterized in that the closing mechanism between the actuation device and the closure elements (4) has a connecting link guide which converts the rotary movement of a lid button, mounted, for example, at the lid body (14), into a radial movement of the closure elements (4).

11. Cooker according to one of claims 1 to 10, characterized in that the closure elements (4), the closing mechanism and the actuation device apart from the lid button are covered by a lid hood (15).

12. Cooker according to one of the preceding claims, with a safety valve and/or pressure-relief valve in its lid (3), where the lid (3) has a lid body (14) and a lid hood (15) covering the lid body (14) and the safety valve and/or pressure-relief valve is arranged under the lid hood (15), characterized in that the lid (3) mounted on the container (1) and capable of being locked with the container (1) forms with the container (1) between the upper edge of the container periphery (2) and the lower edge of the lid hood (15) a gap (16) for the issue of the steam escaping from the valve.

## Revendications

1. Marmite de cuisson à la vapeur sous pression, comportant un récipient (1) qui est destiné à recevoir les aliments à cuire, est fermé de manière étanche à la pression au moyen d'un couvercle (3) qui est posé sur le bord (2) du récipient et peut être verrouillé sur celui-ci, dans lequel, à partir d'un dispositif d'actionnement, par l'intermédiaire d'un mécanisme de fermeture prévu sur le couvercle (3), des éléments de verrouillage (4) peuvent être amenés d'une position ouverte, dans laquelle le couvercle (3) peut être séparé du récipient (1), dans une position verrouillée, dans laquelle le couvercle (3) est pressé au niveau de sa périphérie contre une région du bord (2) du récipient en interposant un joint d'étanchéité (5) périphérique, la paroi (6) du récipient présentant côté intérieur, dans la région du bord (2) du récipient, un épaulement d'étanchéité (9) qui est tourné vers l'ouverture (8) du récipient et les éléments de verrouillage (4), en position de verrouillage, prenant appui sur le récipient (1) en pressant le joint (5) sur l'épaulement d'étanchéité (9), caractérisé par le fait que la paroi (6) du récipient présente, côté intérieur, dans la région du bord (2) du récipient, un épaulement de verrouillage (7) qui est tourné vers le fond du récipient, sert d'appui aux éléments de verrouillage (4) lorsque ceux-ci sont en position de verrouillage et se présente sous la forme d'une partie d'une gorge (13) aménagée dans la paroi (6) du récipient, ouverte en direction de l'axe dudit récipient.

2. Marmite selon la revendication 1, caractérisée par le fait que le joint d'étanchéité (5), sur l'ensemble de sa section ou sur une partie importante de sa section se présente sous la forme d'un anneau torique et, par une partie de sa section d'anneau torique, est monté dans une gorge (10) périphérique du couvercle (3) ouverte par exemple radialement vers l'extérieur.

3. Marmite selon la revendication 1 ou la revendication 2, caractérisée par le fait que le joint d'étanchéité (5) présente, sur sa forme de base d'anneau torique, une lèvre d'étanchéité (5') qui, sous la pression régnant à l'intérieur de la marmite s'applique avec étanchéité contre la surface intérieure (11) de la paroi du récipient (6), côté fond de l'épaulement d'étanchéité (9).

4. Marmite selon l'une des revendications 1 à 3, caractérisée par le fait que l'épaulement d'étanchéité (9) est agencé sous la forme d'une partie située côté fond du récipient d'une gorge (12) réceptrice aménagée dans la paroi (6) du récipient et ouverte en direction de l'ouverture (8) dudit récipient.

5. Marmite selon l'une des revendications 1 à 4, caractérisée par le fait que l'épaulement de verrouillage (7) est aménagé dans une partie de la paroi (6) du récipient située côté ouverture du récipient.

6. Marmite selon l'une des revendications 1 à 5, caractérisée par le fait que dans la région de l'épaulement de verrouillage (7) le récipient (1) présente un diamètre supérieur au diamètre dans la région de l'épaulement d'étanchéité (9).

7. Marmite selon l'une des revendications 1 à 6, caractérisée par le fait que, dans la région comprise entre la gorge (13) et l'épaulement d'étanchéité (9), la surface intérieure (11) de la paroi (6) du récipient présente une conicité progressive, radialement de l'extérieur vers l'intérieur.

8. Marmite selon l'une des revendications 1 à 7, caractérisée par le fait que l'épaulement de verrouillage (7) et/ou l'épaulement d'étanchéité (9) ainsi que de préférence la rainure de verrouillage (13) et/ou la gorge réceptrice (12) sont aménagées dans la paroi (6) du récipient en maintenant sensiblement constante l'épaisseur de ladite paroi.

9. Marmite selon l'une des revendications 1 à 8, caractérisée par le fait qu'au moins deux éléments de verrouillage (4) sont répartis sur la circonférence du couvercle (3) et sont montés avec possibilité de coulissement sur le corps (14) du couvercle, avec un même espacement angulaire et peuvent être amenés par un dispositif d'actionnement commun, par exemple monté au centre du corps (14) du couvercle, de leur position d'ouverture dans leur position de fermeture.

10. Marmite selon l'une des revendications 1 à 9, caractérisée par le fait que le mécanisme de fermeture présente entre le dispositif d'actionnement et les éléments de verrouillage (4) un guide de coulisse qui transforme le mouvement de rotation d'un bouton de couvercle monté par exemple sur le corps (14) du couvercle en un déplacement radial des éléments de verrouillage (4).

11. Marmite selon l'une des revendications 1 à 10, caractérisée par le fait que les éléments de verrouillage (4), le mécanisme de fermeture et le dispositif d'actionnement, à l'exception du bouton du couvercle sont recouverts par une partie (15) de couvercle formant coiffe.

12. Marmite selon l'une des revendications précédentes comportant dans son couvercle une soupape de sécurité et/ou une soupape de relâchement de la pression, dans laquelle le couvercle (3) comprend un corps (14) de couvercle et une partie (15) de couvercle formant coiffe qui couvre ledit corps de couvercle et dans laquelle la soupape de sécurité et/ou la soupape de relâchement de la pression est disposée sous la partie (15) de couvercle formant coiffe, caractérisée par le fait que le couvercle (3) placé sur le récipient (1) et pouvant être verrouillé sur celui-ci (1) forme entre l'arête supérieure du bord du récipient (2) et l'arête inférieure de la partie (15) formant coiffe un espace (16) permettant à la vapeur qui sort de la soupape de s'échapper.
